# EUROPÄISCHE PATENTSCHRIFT

(11) **EP 3 710 234 B1**
(45) Veröffentlichungstag und Bekanntmachung des Hinweises auf die Patenterteilung: **09.08.2023**
(21) Anmeldenummer: 18803919.2
(22) Anmeldetag: 12.11.2018
(51) Int. Cl.: B29C 65/14, B29C 65/10, B29C 65/72, B29C 65/78, B29K 101/12

(54) **VORRICHTUNG ZUM THERMISCHEN VERSCHWEISSEN VON KUNSTSTOFFTEILEN SOWIE ANORDNUNG ENTHALTEND EINE SOLCHE VORRICHTUNG**
DEVICE FOR THERMALLY WELDING PLASTIC PARTS, AND ASSEMBLY CONTAINING A DEVICE OF THIS KIND
DISPOSITIF DESTINÉ AU SOUDAGE THERMIQUE DE PIÈCES EN PLASTIQUE AINSI QU'AGENCEMENT COMPRENANT UN TEL DISPOSITIF

(30) Priorität: 14.11.2017 DE 102017010550
(43) Veröffentlichungstag der Anmeldung: 23.09.2020
(73) Patentinhaber: Barkhoff, Roland, 68161 Mannheim (DE)
(72) Erfinder: Barkhoff, Roland, 68161 Mannheim (DE)
(74) Vertreter: Kesselhut, Wolf
(86) Internationale Anmeldenummer: PCT/EP2018/080896
(87) Internationale Veröffentlichungsnummer: WO 2019/096725

(56) Entgegenhaltungen:
- EP-A1- 1 415 789
- CN-B- 102 935 719
- DE-A1- 10 019 300
- DE-A1-102007 026 163

## Beschreibung

Die Erfindung betrifft eine Vorrichtung zum thermischen Verschweißen von Kunststoffteilen sowie eine Anordnung enthaltend eine solche Vorrichtung gemäß dem Oberbegriff von Anspruch 1 und 15.

Zum Verschweißen von Werkstücken aus thermoplastischem Kunststoff, wie z.B. Flanschverbindungen an Kunststoffrohren, werden bekanntermaßen Schweißvorrichtungen eingesetzt, die eine Heizplatte aus einem thermisch isolierenden Werkstoff besitzen, in der eine Nut geformt ist, in welcher sich eine elektrisch beheizte mäanderförmige bandartige Metallfolie befindet. Für den Schweißvorgang wird die zu erwärmende Werkstückoberfläche für wenige Sekunden in dichtem Abstand zum Heizelement positioniert und das Werkstück mit der erwärmten Werkstückoberfläche im Anschluß daran unter Druck gegen die in gleicher Weise erwärmte und angeschmolzene komplementäre Oberfläche des zugehörigen anderen Werkstücks gepresst.

Wie vom Anmelder in diesem Zusammenhang erkannt wurde, tritt durch die als Infrarotstrahlung zugeführte Wärmeenergie der auf z.B. 600 °C erwärmten Heizfolie in Verbindung mit dem anwesenden Luftsauerstoff im Bereich der erwärmten Werkstückoberflächen mitunter eine Oxidation des Kunststoffmaterials auf, die die Stabilität der Schweißverbindung nachteilig beeinträchtigen kann.

Um dem zu begegnen schlägt die EP 1 415 789 B1 eine Vorrichtung zum Verschweißen von Werkstücken aus thermoplastischem Kunststoffmaterial vor, bei der die zu verschweißenden Werkstückoberflächen ausschließlich durch ein Schutzgas und nicht durch Infrarotstrahlung eines Heizelements angeschmolzen werden, welches hierzu auf eine Temperatur oberhalb der Schmelztemperatur des Kunststoffmaterials erhitzt wird. Obgleich die Gefahr einer Oxidation des Kunststoffmaterials durch das Schutzgas verringert wird, ist der Energiebedarf und die Menge an benötigtem Schutzgas vergleichsweise hoch, was zu hohen Betriebskosten der Vorrichtung führt.

Aus der DE 100 19 300 A1 ist eine Vorrichtung zum Schweißen oder Verformen von Kunststoffteilen, insbesondere zum Stauchen von Kunststoff-Nietköpfen bekannt, bei der ein erhitzter Schweißkopf an den zu schweißenden oder zu verformenden Werkstückbereich zur Übertragung von Strahlungswärme herangeführt und während der Übertragung von Strahlungswärme ein Heißluftstrom auf den bearbeiteten Werkstückbereich geleitet wird.

Weiterhin beschreibt die DE 10 2007 026 163 A1 ein Verfahren zum Schweißen von Kunststoffteilen, bei dem der Kunststoff mittels eines Strahlungskörpers durch Wärmestrahlung und zugleich durch Beaufschlagung mit einem heißen Gas erhitzt wird. Das Verfahren zeichnet sich dadurch aus, dass der Strahlungskörper an seiner Innenseite durch Verbrennung eines Heizgases erhitzt und der Kunststoff mit dem Abgas der Verbrennung beaufschlagt wird.

Eine weitere Vorrichtung zum Verschweißen von Kunststoffteilen ist aus der CN-A1027444878 bekannt.

Die zuletzt genannten Dokumente geben keinen Hinweis darauf, eine Oxidation des Kunststoffs während des Erhitzens desselben zu vermeiden.

Demgemäß ist es eine Aufgabe der vorliegenden Erfindung, eine Vorrichtung zu schaffen, welche eine oxidationsfreie Verschweißung von thermoplastischen Kunststoffteilen mit geringen Betriebskosten ermöglicht.

Diese Aufgabe wird erfindungsgemäß durch eine Vorrichtung mit den Merkmalen von Anspruch 1 gelöst.

Eine weitere Aufgabe der Erfindung besteht darin, eine Anordnung bereit zu stellen, mit welcher sich zwei Kunststoffteile aus einem thermoplastischen Werkstoff bei geringen Betriebskosten automatisiert mit hoher Präzision miteinander verschweißen lassen.

Diese Aufgabe wird erfindungsgemäß durch eine Anordnung mit den Merkmalen von Anspruch 15 gelöst.

Weitere Merkmale der Erfindung sind in den Unteransprüchen enthalten.

Der Vorteil der Erfindung ist darin zu sehen, dass aufgrund der Erhitzung der Kunststoffflächen durch die Infrarotstrahlung der Heizfolien oder Heizelemente eine sehr effiziente Erwärmung des Kunststoffmaterials erfolgt, ohne dass das Schutzgas als solches erwärmt wird.

Eine weitere Verringerung der zugeführten Menge an Schutzgas lässt sich dadurch erreichen, dass der zu erwärmende Flanschabschnitt des Kunststoffteils nahezu vollständig dichtend auf der Oberseite der keramischen Heizplatte aufliegt. Diese ist bevorzugt auf der Ober- und der Unterseite mit einer entsprechenden umlaufenden Nut versehen ist, in die als mäanderförmige oder zickzackförmige Heizfolien ausgeführten Heizelemente eingelegt sind, und in welche hinein das Schutzgas vorzugsweise über eine umlaufende schmalere und weiter innen liegende Nut über Durchgangskanäle, die auch als Düsenbohrungen ausgeführt sein können und einen vorzugsweise umlaufenden Zufuhrkanal zugeführt wird.

Die Erfindung wird nachfolgend mit Bezug auf die Zeichnungen anhand von bevorzugten Ausführungsformen beschrieben.

In den Zeichnungen zeigen:
- Fig. 1: eine rein schematische, semitransparente Darstellung der erfindungsgemäßen Vorrichtung zur Veranschaulichung der Position des Zufuhrkanals, der Durchgangskanäle sowie der Nut und der darin aufgenommenen Metallfolie innerhalb der Keramikplatte sowie auch der angeschlossenen Schutzgasquelle, Heizeinrichtung und Ventil mit Steuerungseinrichtung,
- Fig. 2: eine Aufsicht auf die Heizplatte mit der darin geformten Nut und eingesetzter Metallfolie sowie der elektrischen Anschlüsse zur Zufuhr von elektrischer Energie zur Metallfolie,
- Fig. 3: eine schematische Darstellung der Nut mit den im Nutengrund geformten Durchgangskanälen,
- Fig. 4: eine vergrößerte schematische Schnittdarstellung durch die Heizplatte entlang der Zuleitung für das Schutzgas,
- Figs. 5a-5f: eine erfindungsgemäße Anordnung in den aufeinanderfolgend durchgeführten Verfahrensschritten während des Verschweißens zweier Kunststoffteile zur Verdeutlichung der jeweiligen Positionen der Heizplatte und Bewegungseinrichtungen zum Verfahren der beiden zu verschweißenden Werkstücke,
- Fig. 6: eine schematische Schnittansicht einer weiteren Ausführungsform der erfindungsgemäßen Vorrichtung, bei der auf der der Nut gegenüberliegenden Seite der Heizplatte eine Zwischenplatte sowie eine diese abdeckende Grundplatte mit einer weiteren Nut angeordnet ist, in welcher sich ein weiteres Heizelement zum Vorheizen des Schutzgases befindet,
- Fig. 7: eine Aufsicht auf die Grundplatte mit der darin eingebrachten weiteren Nut und dem eingesetzten weiteren Heizelement, und
- Fig. 8: eine schematische räumliche Darstellung der weiteren Ausführungsform mit zusammengefügtem Sandwich aus Heizplatte, Zwischenplatte und Grundplatte.

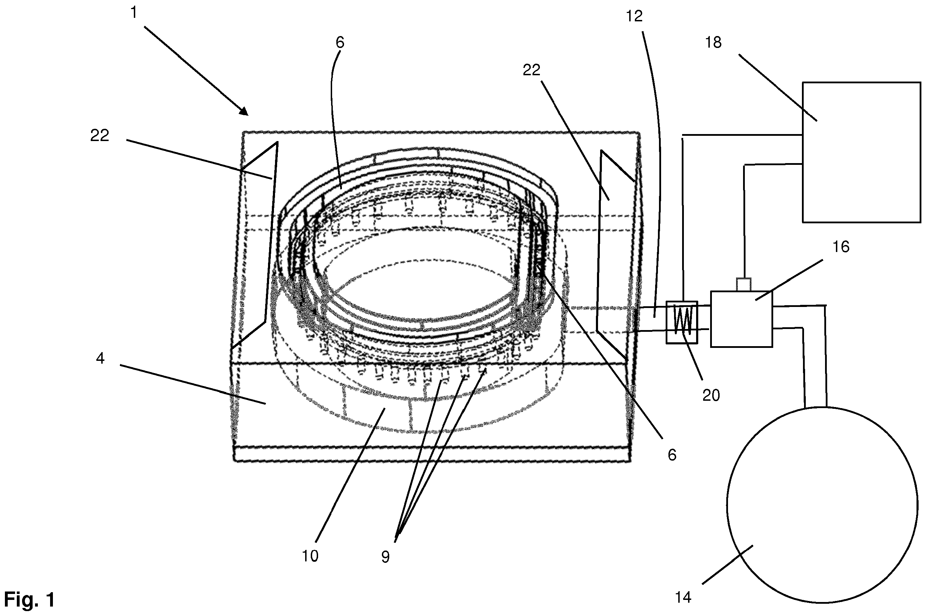

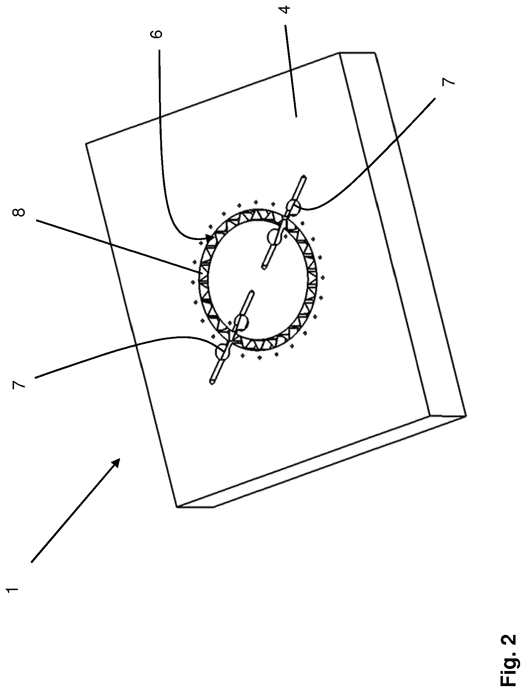

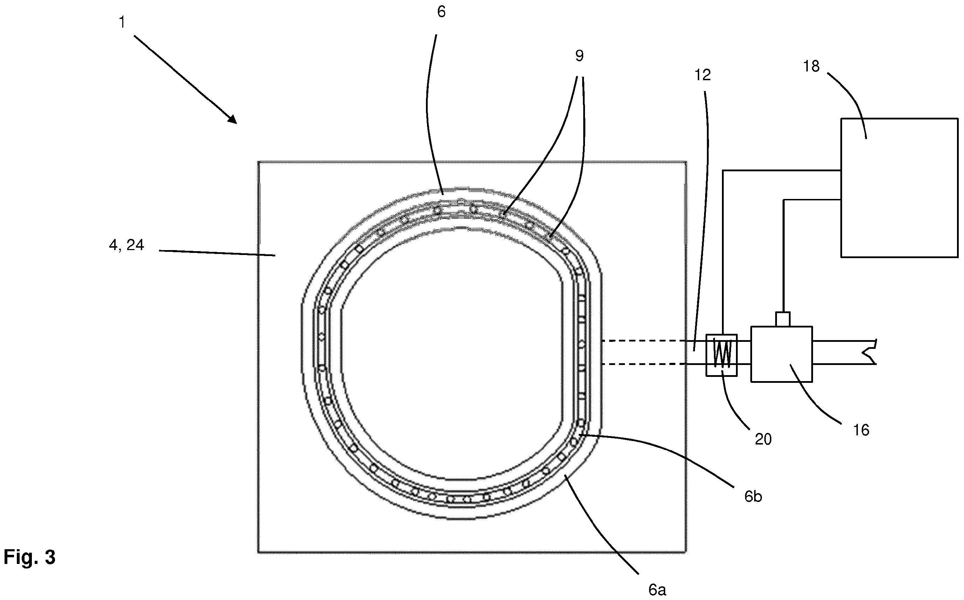

Wie in den Fig. 1 - 4 gezeigt ist, umfasst eine Vorrichtung 1 zum thermischen Verschweißen von zwei Werkstücken 2a, 2b aus einem thermoplastischen Kunststoffmaterial eine in Fig. 2 und 3 gezeigte Heizplatte 4 aus einem thermisch isolierenden Werkstoff, bei dem es sich vorzugsweise um einen Keramikwerkstoff handelt. In die Oberseite der Heizplatte 4 ist eine Nut 6 eingefräst, die eine Form besitzt, welche der Form der zu erhitzenden Schweißfläche 3 des Werkstücks 2a, 2b, beispielsweise eine Flanschfläche, angepasst ist, und die in der Regel eine durchgängige Form aufweist.

Wie aus den Fig. 1, 2 und 4 im Detail entnommen werden kann, ist in die Nut 6 ein elektrisch beheizbares Heizelement 8 eingesetzt, welches bevorzugt als mäanderförmig gebogene bandartige Metallfolie ausgestaltet ist, die über in Fig. 2 angedeutete, elektrische Anschlusskontakte 7 mit einer nicht näher gezeigten Stromquelle verbunden wird, um die Metallfolie elektrisch auf eine Temperatur von beispielsweise 600 °C zu erhitzen.

Anstelle der Metallfolie kann es ebenfalls vorgesehen sein, dass in der Nut 6 ein Heizelement in Form eines bekannten Widerstandsheizelements aufgenommen ist, wie es beispielsweise von Infrarotstrahlern her bekannt ist.

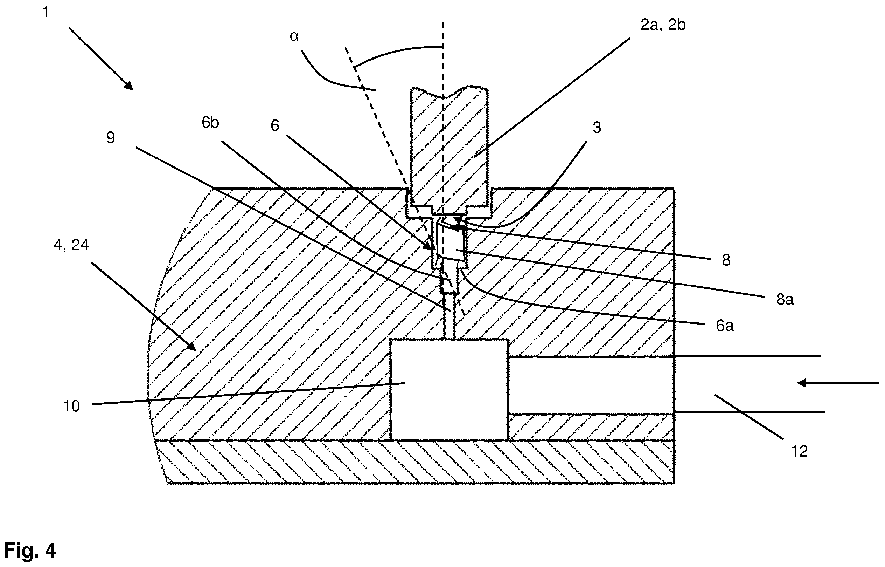

Um die Schweißflächen 3 des zu verschweißenden Werkstücks 2a, 2b zu erwärmen und dadurch das Kunststoffmaterial im Bereich der Oberfläche anzuschmelzen, wird dieses in einer nachfolgend noch näher beschriebenen erfindungsgemäßen Anordnung 40 in dichtem Abstand zum Heizelement, d.h. in unmittelbarer Nähe oberhalb der Heizplatte 4, positioniert, wie dies beispielsweise in Fig. 4 angedeutet ist.

Damit während des Erwärmens der zu verschweißenden Kontaktfläche des jeweiligen Werkstücks 2a, 2b eine Oxidation des Kunststoffmaterials durch den Sauerstoff der die Heizplatte umgebenden Luft so weit wie möglich reduziert wird, ist es gemäß der Erfindung vorgesehen, dass in der Heizplatte 4 ein Zufuhrkanal 10 für ein Schutzgas geformt ist, der, wie in Fig. 4 gezeigt, mit der Nut 6 über wenigstens eine, bevorzugt jedoch eine Vielzahl von als Düsenbohrungen ausgeführten Durchgangskanälen 9 kommuniziert, d.h. strömungsmäßig verbunden ist. Gemäß der Darstellung von Fig. 1, 3 und 4 ist der Zufuhrkanal 10 mit einer Zufuhrleitung 12 verbunden, die in die Heizplatte 4 vorzugsweise als geradlinige durchgängige Bohrung eingebracht ist. Wie in Fig. 1 gezeigt ist, ist die Zufuhrleitung 12 außerhalb der Heizplatte 4, d.h. außerhalb des Keramikwerkstoffs, als herkömmliche, vorzugsweise flexible Zuleitung ausgeführt, die über ein Ventil 16 mit einer schematisch angedeuteten Schutzgasquelle 14 verbunden ist.

Gemäß der Darstellung von Fig. 1 ist bei der bevorzugten Ausführungsform der Erfindung in der Zufuhrleitung 12 von der Schutzgasquelle 14 zum Zufuhrkanal 10 ein Heizelement 20 angeordnet, das beispielsweise als elektrisches Widerstandsheizelement ausgeführt ist, das durch eine Steuerungseinrichtung 18 mit einer nicht näher gezeigten Stromquelle verbunden wird, um das zugeführte Schutzgas, beispielsweise Argon oder Stickstoff, auf eine Temperatur unterhalb der Schmelztemperatur des Kunststoffmaterials vorzuerwärmen. Hierdurch ergibt sich der Vorteil, dass das während des Schweißvorgangs über das in der Regel glühende elektrische Heizelement 8 hinwegströmende Schutzgas das Heizelement 8 nicht übermäßig stark abkühlt, wodurch es in Verbindung mit der im Wesentlichen konstanten Vortemperatur des Schutzgases möglich ist, die über die Infrarotstrahlung auf die anzuschmelzenden Schweißflächen 3 übertragene Wärmeenergie allein über den Stromfluss im Heizelement 8 sehr feinfühlig auf eine gewünschte Temperatur einzustellen. Ein weiterer Vorteil besteht darin, dass das Heizelement 20 in der Zufuhrleitung 12 für das Schutzgas in einer beliebigen Größe dimensioniert werden kann, um das Schutzgas auf die gewünschte Vortemperatur von beispielsweise 230 °C zu erhitzen, was es ermöglicht, dass aufgrund der großzügigen Platzverhältnisse außerhalb der Heizplatte vergleichsweise kostengünstige großbauende Heizelemente eingesetzt werden können.

Ein weiterer Vorteil, der sich durch diese Ausführungsform der Erfindung ergibt, ist darin zu sehen, dass durch das vom Heizelement 20 in der Zufuhrleitung 12 erwärmte Schutzgas ein zusätzlicher Eintrag von thermischer Energie in die zu erwärmende Schweißfläche 3 erfolgt, was dazu führt, dass die Strahlungsleistung, die vom Heizelement 8 in der Nut 6 abgegeben werden muss, gegenüber Vorrichtungen, bei denen ausschließlich Heizelemente zum Einsatz gelangen, die nicht durch ein Schutzgas beaufschlagt werden, erheblich verringert werden kann. Anders ausgedrückt lässt sich durch das Schutzgas als zusätzlicher Wärmeträger die Heizleistung des elektrischen Heizelements 8 in der Nut 6 in vorteilhafter Weise reduzieren, was zu einer vorteilhaften Erhöhung der Lebensdauer des Heizelements führt.

Wie der Darstellung von Fig. 1 hierbei im Detail entnommen werden kann, können das Heizelement 20 und auch das Ventil 16 über ein und dieselbe elektronische Steuerungseinrichtung 18 angesteuert werden, die hierzu z.B. einen Mikrocontroller enthalten kann.

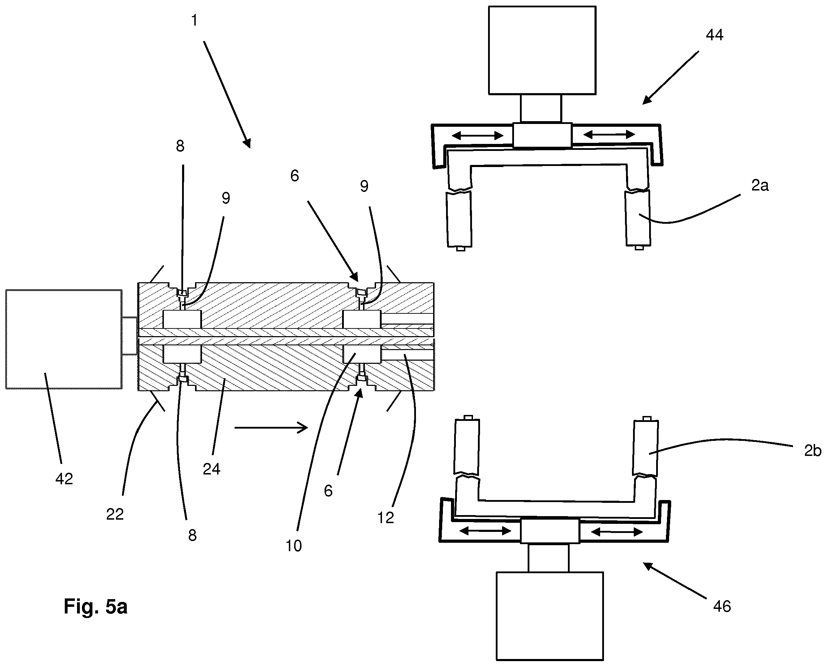

Gemäß einem weiteren der Erfindung zugrunde liegenden Gedanken können, wie in Fig. 1 angedeutet ist, auf der Oberseite 4O, und/oder Unterseite 4U der Heizplatte 4 spoilerartige Luftleitelemente 22 angeordnet sein. Diese verhindern, dass beim Verfahren der Heizplatte 4 oder gar der gesamten Vorrichtung 1 durch einen ersten Aktuator 42 in einer in den Fig. 5a - 5f gezeigten Anordnung 40 Umgebungsluft ungehindert in die Nut 6 einströmt und das darin enthaltene Schutzgas aus dieser verdrängt. Alternativ zu den beiden in Fig. 1 angedeuteten einzelnen Luftleitelementen 22 kann es ebenfalls vorgesehen sein, die gesamte umlaufende Nut 6 mit einem in den Darstellungen nicht näher gezeigten ringförmig ausgestalteten spoilerartigen Luftleitelement 22 zu umgeben, welches in vertikaler Richtung beispielsweise 18 - 20 mm über die Nut 6 hinaussteht. In der Aufsicht betrachtet befindet sich die obere Kante des oder der Luftleitelemente 22 in radialer Richtung außerhalb vom Rand der umlaufenden Nut 6, sodass ausreichend Platz verbleibt, um die zu erwärmende Schweißfläche 3 des jeweiligen Werkstücks 2a, 2b von oben her über die Nut 6 und das darin enthaltene Heizelement 8 abzusenken.

Alternativ kann es vorgesehen sein, dass gemäß einer in den Figuren nicht näher gezeigten Ausfuhrungsform der Erfindung die gesamte Oberseite der Heizplatte 4 im Bereich der Nut 6 durch ein oder mehrere Abdeckelemente abgedeckt werden kann, sodass ein Ausströmen des Schutzgases vollständig unterbunden wird. Sofern in diesem Zusammenhang von Ober- und Unterseite gesprochen wird, bedeutet dies, dass bei einer paarweisen Anordnung von zwei Nuten 6 innerhalb einer Heizplatte 4, wie sie in der Anordnung der Fig. 5a - 5f gezeigt ist, sowohl die Nut 6 an der Oberseite 4O der Heizplatte 4 als auch die Nut 6 auf der Unterseite 4U derselben durch ein entsprechendes, nicht näher gezeigtes Abdeckelement abdeckbar ist, um ein ungehindertes Ausströmen des Schutzgases bei denjenigen Verfahrensschritten des Schweißverfahrens zu verhindern, bei denen die Nuten 6 nicht durch die Schweißflächen 3 der zu verschweißenden Werkstücke 2a, 2b selbst verschlossen werden.

Durch das Vorsehen von einem oder mehreren Abdeckelementen, die beispielsweise als scheibenförmige Deckel ausgeführt sein können, die durch einen eigenen Antrieb oder auch durch eine aus der Bewegung der Heizplatte abgeleitete Stellkraft über die entsprechende Nut 6 hinweg verschwenkt werden können, ergibt sich der Vorteil, dass die benötigte Menge an Schutzgas beachtlich verringert werden kann, insbesondere dann, wenn das Ventil 16 in den Phasen, in denen die Nuten 6 verschlossen sind, ebenfalls durch die Steuerungseinrichtung 18 verschlossen wird und das Heizelement 20 in der Zufuhrleitung 12 stromlos geschaltet oder mit reduzierter elektrischer Leistung betrieben wird.

Hierbei versteht es sich, dass das Ventil 18 im einfachsten Falle ein Auf-Zu-Ventil sein kann, welches durch die Steuerungseinrichtung 18 entweder geschlossen oder geöffnet wird. Alternativ besteht jedoch auch die Möglichkeit, dass das Ventil 16 ein Proportionalventil ist, welches von der Steuerungseinrichtung 18 in entsprechende Zwischenpositionen verfahren werden kann, sodass eine feinfühlige Regelung der Menge an zugeführtem Schutzgas ermöglicht wird.

Obgleich der Zufuhrkanal 10 für das Schutzgas bei der bevorzugten Ausführungsform der Erfindung ein in den Figuren gezeigter umlaufender ringförmiger Kanal ist, der lediglich von einem Ende aus über die Zuleitung 12 mit Schutzgas aus der Schutzgasquelle 14 beaufschlagt wird, kann es gemäß einer weiteren, in den Figuren nicht näher gezeigten Ausführungsform der Erfindung vorgesehen sein, dass der Zufuhrkanal 10 als ein nicht durchgängiger Blindkanal ausgebildet ist, in welchen das Schutzgas nur von einer Seite aus zugeführt wird, und der an seinem anderen Ende durch eine Wand verschlossen ist, die sich beispielsweise in einem Teilbereich der zu verbindenden Werkstücke 2a, 2b befindet, in dem aufgrund eines ausgenommenen oder zurückgesetzten Abschnitts kein Schweißvorgang erfolgt.

Obgleich die Öffnungen der Durchgangskanäle 9 über die Länge des Zuführkanals 10 hinweg allesamt bevorzugt den gleichen Durchmesser aufweisen, kann es alternativ vorgesehen sein, dass die Durchmesser der Durchgangskanäle 9 sich ausgehend von der Einmündung der Zuleitung 12 in den Zufuhrkanal 10 fortlaufend erweitern, um den Druckabfall innerhalb des Zufuhrkanals 10 zu kompensieren. Bei der in den Figuren gezeigten Ausführungsform eines umlaufenden Zufuhrkanals 10 befinden sich die Durchgangsbohrungen oder allgemein Durchgangskanäle 9 mit den größten Öffnungsdurchmessem in vorteilhafter Weise auf der der Einmündung der Zuleitung 12 gegenüberliegenden Seite des in der Aufsicht im Wesentlichen ringförmigen umlaufenden Kanals 10.

Bei der bevorzugten Ausführungsform der Erfindung umfasst das Heizelement 8 bevorzugt ein mäanderförmiges oder zickzack-förmiges Metallband, welches besonders bevorzugt als Metallfolie ausgebildet ist, welche eine Vielzahl von stehend in der Nut 6 aufgenommenen, aneinanderhängenden flächigen Außenabschnitten 8a besitzt. Der Zufuhrkanal 10 für das Schutzgas erstreckt sich hierbei vorzugsweise parallel zur Nut 6 im weiter innen liegenden Teil der Heizplatte 4 derart, dass sich die ebenen flächigen Außenabschnitte 8a auf dem Grund 6a der Nut 6 abstützen und sich zumindest teilweise oberhalb der Durchgangskanäle 9 über diese hinweg erstrecken, wie dies in Fig. 4 angedeutet ist. Diese Ausführungsform schließt ebenfalls mit ein, dass sich im Zentrum der Nut 6 ein weiterer umlaufender Verteilkanal 6b für das Schutzgas erstrecken kann, welcher eine geringere Breite als die Nut 6 besitzt und in welchen die Durchgangskanäle 9 von unten hinein einmünden, wie dies in Fig. 4 schematisch angedeutet ist. Durch den Einsatz eines solchen Verteilkanals 6b, dessen Breite beispielsweise die Hälfte der Breite der Nut 6 beträgt, ergibt sich der Vorteil, dass die mäander- oder zickzack-förmigen Heizelemente 8 sich mit ihrer Unterseite auf dem Grund 6a der Nut 6 abstützen können, und das Schutzgas das mäanderförmige oder zickzackförmige Heizelement 8 über seine gesamte Länge hinweg weitestgehend homogen umströmt. Hierdurch besitzt das Heizelement 8 während des Betriebs eine nahezu homogene Temperatur, die eine weitestgehend homogene Erwärmung der Schweißflächen 3 durch die abgestrahlte Infrarotstrahlung sicherstellt.

Um einen Energieübertrag vom elektrischen Heizelement 8 auf das zugeführte Schutzgas soweit wie möglich zu reduzieren, der zu einem unerwünschten Abkühlen des Heizelements 8 durch Konvektion führen kann, werden die vertikalen ebenen flächigen Außenabschnitte 8a der mäanderförmigen oder zickzack-förmigen elektrischen Heizelemente 8 in der umlaufenden Nut 6 bevorzugt durch die darunterliegenden Durchgangskanäle 9 so angeströmt, dass das Schutzgas in einem Winkel α von weniger als 45°, bevorzugt weniger als 20°, und besonders bevorzugt weniger als 5° auf den ebenen flächigen Außenabschnitt 8a des Heizelements 8 auftrifft. Besonders bevorzugt erfolgt das Anströmen der stehend in der Nut 6 angeordneten mäanderförmigen oder zickzack-förmigen Metallfolien durch Durchgangskanäle 9 hindurch, welche sich unmittelbar unterhalb des unteren Randes der Metallfolien befinden und deren Längsachsen sich parallel zu den stehend in der Nut 6 angeordneten ebenen flächigen Außenabschnitten 8a der Heizelemente 8 erstrecken, d.h. einen Winkel α von 0° einnehmen.

Wie weiterhin in Fig. 5a gezeigt ist, umfasst die Heizplatte 4 aus Keramikwerkstoff bei einer Vorrichtung 1, die bevorzugt in einer in den Fig. 5a - 5f gezeigten Anordnung 40 zum Verschweißen von zwei Werkstücken 2a, 2b aus thermoplastischem Kunststoffmaterial verwendet wird, einen abgeflachten quaderförmigen Grundkörper 24, auf dessen einander gegenüberliegenden Seiten 40, 4U jeweils wenigstens ein mit dem Schutzgas beaufschlagtes Heizelement 4 in einer zugehörigen Nut 6 aufgenommen ist, welche über einen jeweiligen Zufuhrkanal 10 mit Schutzgas aus der Schutzgasquelle 14 beaufschlagt werden kann. Obgleich die Zufuhrleitungen 12 und Zufuhrkanäle 10 für das Schutzgas bei der in den Fig. 5a - 5f gezeigten Vorrichtung 1 als getrennte Kanäle ausgeführt sind, kann es gemäß einer nicht näher gezeigten Ausführungsform, die von den Ansprüchen der vorliegenden Anmeldung ebenfalls mit umfasst sein soll, vorgesehen sein, dass lediglich ein einziger geschlossen umlaufender oder auch als Blindkanal ausgeformter Zufuhrkanal 10 vorgesehen ist, welcher über lediglich eine einzige Zuleitung 12 mit Schutzgas beaufschlagt wird. Über diesen werden sowohl die an der Oberseite 40, als auch die an der Unterseite 4U angeordnete Nut 6 über die zugehörigen Durchgangskanäle 9 mit Schutzgas beaufschlagt. Ein solcher Grundkörper 24 kann beispielsweise dadurch erhalten werden, dass zwei auf der Unterseite offene Heizplatten 4, wie sie in Fig. 4 gezeigt sind, Rücken an Rücken aneinander gefügt werden, wobei die Zuleitung 12 lediglich in einer der Platten geformt ist.

Nachfolgend wird eine bevorzugte Ausführungsform einer erfindungsgemäßen Anordnung 40 zum Verschweißen von zwei Werkstücken 2a, 2b aus thermoplastischem Kunststoffmaterial beschrieben, bei der eine erfindungsgemäße Vorrichtung 1 zum Einsatz gelangt, die bevorzugt eine zuvor beschriebene Heizplatte 4 mit einem Grundkörper 24 umfasst, in dem an der Oberseite 4O und an der Unterseite 4U jeweils eine entsprechende Nut 6 angeordnet ist, in der jeweils ein elektrisch beheiztes Heizelement 8 aufgenommen ist, und die jeweils über einen entsprechenden innenliegenden Zufuhrkanal 10 aus einer nicht näher gezeigten Schutzgasquelle mit Schutzgas beaufschlagt werden.

Um ein erstes und ein zweites in Fig. 5a gezeigtes Werkstück 2a, 2b an den Schweißflächen 3 miteinander zu verschweißen, ist die erfindungsgemäße Vorrichtung 1 an einem ersten Aktuator 42 aufgenommen, welcher beispielsweise ein Hydraulik- oder Pneumatikzylinder oder auch ein sonstiger Linearantrieb sein kann. Das erste Werkstück 2a ist in einer ersten Bewegungseinrichtung 44 aufgenommen, welche beispielsweise einen schemarisch angedeuteten Greifer und einen nicht näher bezeichneten Linearantrieb, z.B. einen Pneumatik- oder Hydraulikzylinder aufweisen kann. Darüber hinaus ist das zweite Werkstück 2b in einer zweiten Bewegungseinrichtung 46 aufgenommen, welche bevorzugt identisch zur ersten Bewegungseinrichtung 44 ausgeführt ist und die ebenfalls einen schematisch angedeuteten Greifer umfasst, der an einem entsprechenden Linearbeweger aufgenommen ist. Der Aktuator 42 sowie auch die erste und die zweite Bewegungseinrichtung 44 und 46 werden bevorzugt über eine zentrale Steuerungseinrichtung angesteuert, die insbesondere die in Fig. 1 gezeigte Steuerungseinrichtung 18 sein kann, welche auch das Ventil 16 und das Heizelement 20 steuert.

In der in Fig. 5a gezeigten Ausgangsstellung befinden sich sowohl der Aktuator 42, als auch die erste und die zweite Bewegungseinrichtung 44, 46 in der eingefahrenen Position, die beispielsweise unmittelbar nach dem Aufnehmen des ersten und des zweiten Werkstücks 2a, 2b durch die erste und zweite Bewegungseinrichtung 44, 46 eingenommen wird.

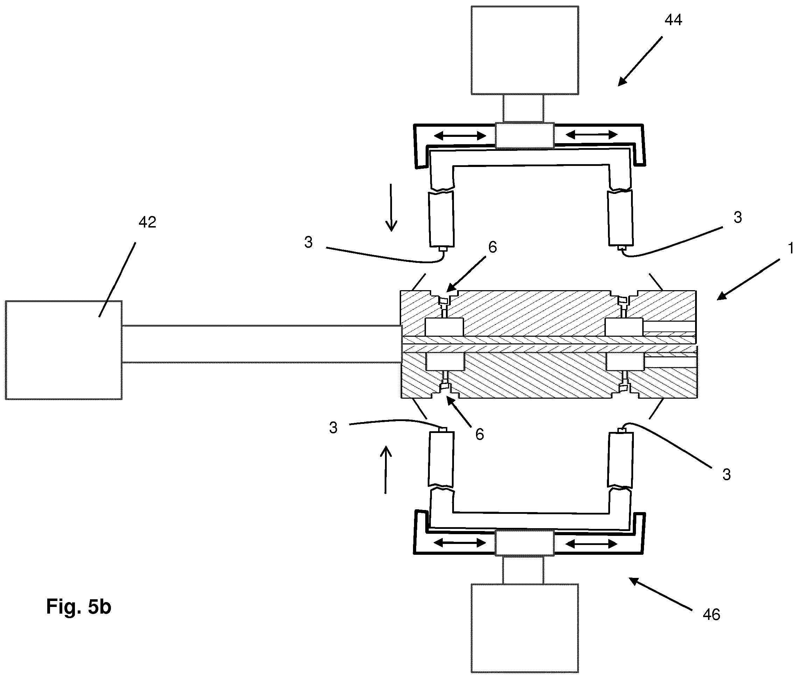

In dem in Fig. 5b gezeigten, sich anschließenden Verfahrensschritt des erfindungsgemäßen Schweißverfahrens wird der Aktuator 42 aus der eingefahrenen Position in die ausgefahrene Position verfahren und bewegt hierdurch die Heizplatte 4 der erfindungsgemäßen Vorrichtung 1 in eine Position, in der die Schweißflächen 3 fluchtend zu den Nuten 6 ausgerichtet sind, sich jedoch noch im Abstand von beispielsweise 50 mm oder mehr von diesen befinden.

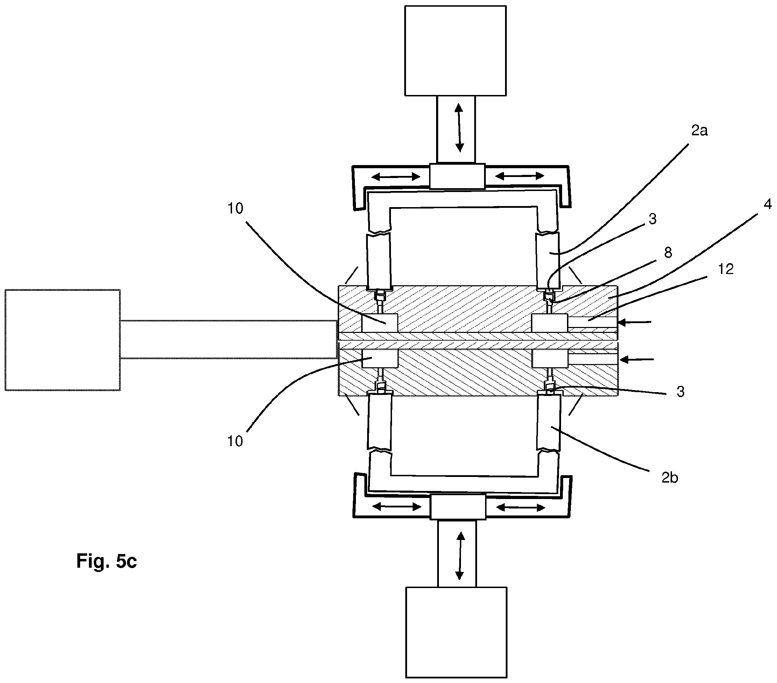

In dem darauf folgenden, in Fig. 5c gezeigten Verfahrensschritt des Schweißverfahrens werden die Werkstücke 2a, 2b durch die zugehörigen Bewegungseinrichtungen 44, 46 in Richtung auf die Oberseite 4O und Unterseite 4U der Heizplatte 4 zu verfahren, bis sich die Schweißflächen 3 jeweils in dichtem Abstand von z.B. 0,5 - 1 mm zu dem in der jeweiligen Nut 6 angeordneten Heizelement 8 befinden. Dieses wird an seinen elektrischen Anschlusskontakten 7 mit einer nicht näher gezeigten Stromquelle verbunden und dadurch auf eine Temperatur von z.B. 600 °C aufgeheizt. Gleichzeitig wird durch das nicht näher gezeigte Ventil 16 Schutzgas aus der Schutzgasquelle 18 in die Zuleitungen 12 und den Zufuhrkanal 10, bzw. die Zufuhrkanäle 10 eingeleitet, wie dies durch die nicht näher bezeichneten Pfeile in Fig. 5c angedeutet ist, so dass die Schweißflächen 3 der Werkstücke 2a, 2b durch die Infrarotstrahlung der Heizelemente 8 unter der Einwirkung einer Schutzgasatmosphäre auf die Schmelztemperatur des Kunststoffmaterials erwärmt werden.

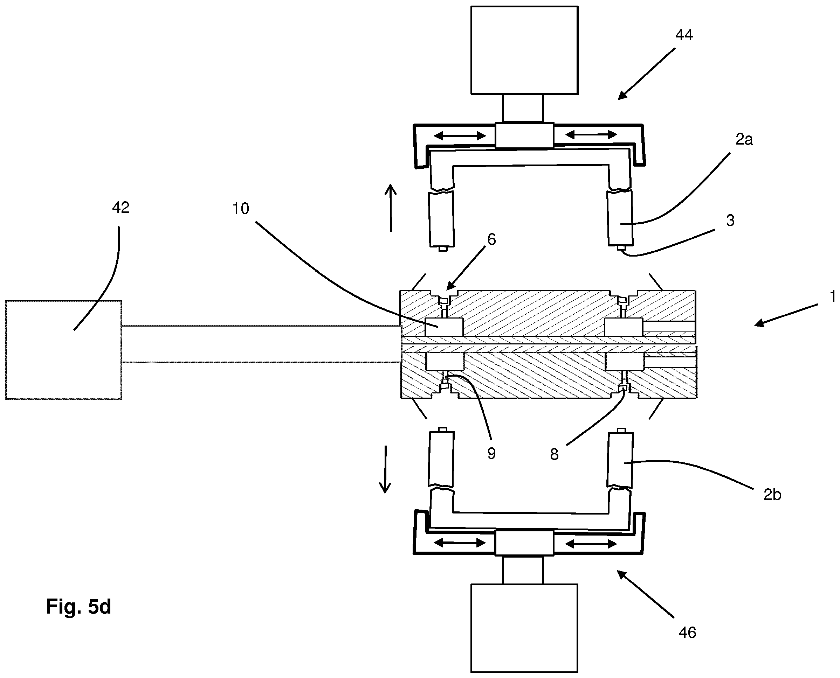

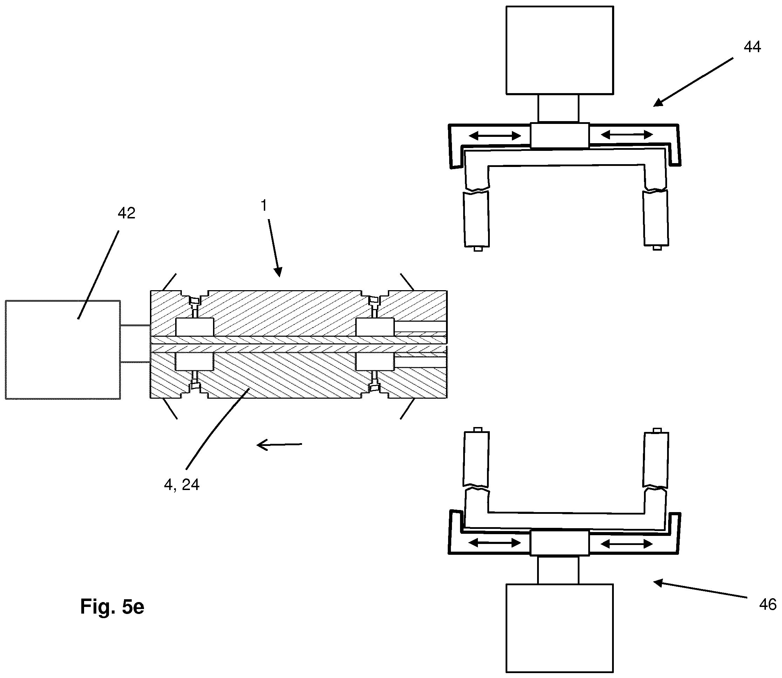

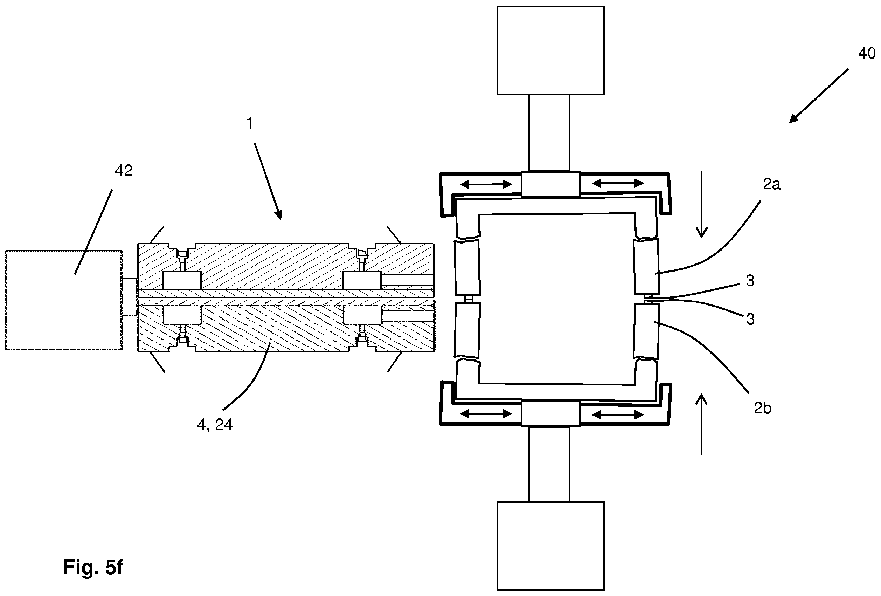

Nachdem die Schweißflächen 3 durch die Infrarotstrahlung der Heizelemente 8 sowie auch das bevorzugt durch ein Heizelement 20 in der Zufuhrleitung 12 (vgl. Figs. 1 und 3) vorgewärmte Schutzgas auf die erforderliche Schmelztemperatur des Kunststoffmaterials erwärmt wurden, werden die erste und die zweite Bewegungseinrichtung 44, 46 mit den daran aufgenommenen erwärmten ersten und zweiten Werkstücken 2a, 2b in die in Fig. 5d gezeigte eingefahrene Position zurückverfahren und die Heizplatte 4, bzw. die Vorrichtung 1, durch den ersten Aktuator 42 in Richtung des nicht näher bezeichneten Pfeils zwischen dem ersten und zweiten Werkstück 2a, 2b herausbewegt, wie dies in Fig. 5e angedeutet ist. In dem in Fig. 5f gezeigten Verfahrensschritt des erfindungsgemäßen Schweißverfahrens werden das erste Werkstück 2a und das zweite Werkstück 2b anschließend durch die zugehörige erste, bzw. zweite Bewegungseinrichtung 44, 46 über die in Fig. 5c gezeigte Aufheizposition hinaus aufeinander zu bewegt, bis die angeschmolzenen Schweißflächen 3 des ersten Werkstücks 2a an den ebenfalls angeschmolzenen Schweißflächen 3 des zweiten Werkstücks 2b anliegen. Durch Ausüben eines vorgegebenen Anpressdrucks werden die beiden Werkstücke 2a, 2b in dieser in Fig. 5f gezeigten Schweißposition solange aneinander gehalten, bis das Kunststoffmaterial sich wieder verfestigt hat und die beiden Werkstücke 2a, 2b zu einem Werkstück verbunden sind.

Durch Öffnen der jeweiligen Greifer der ersten und zweiten Bewegungseinrichtung 44, 46 kann das so geformte Endprodukt im Anschluss daran der Weiterverarbeitung zugeführt werden.

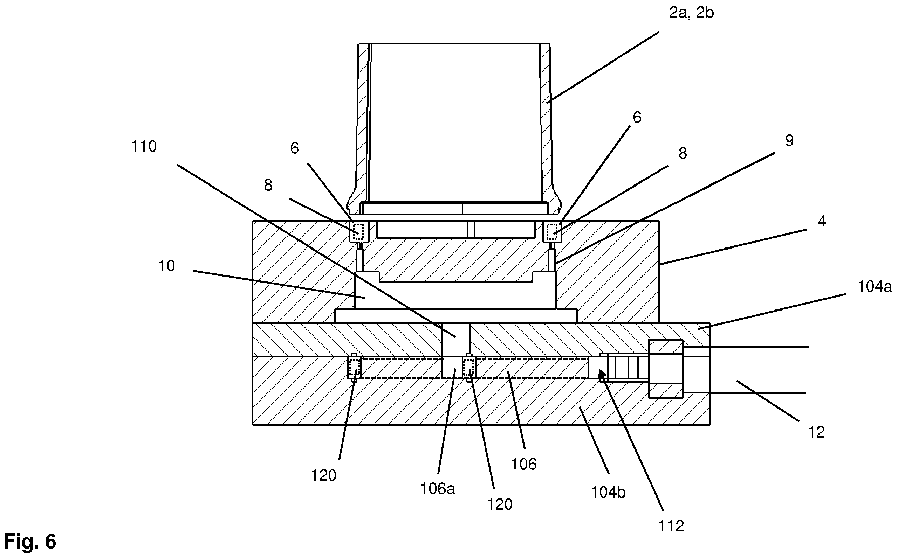

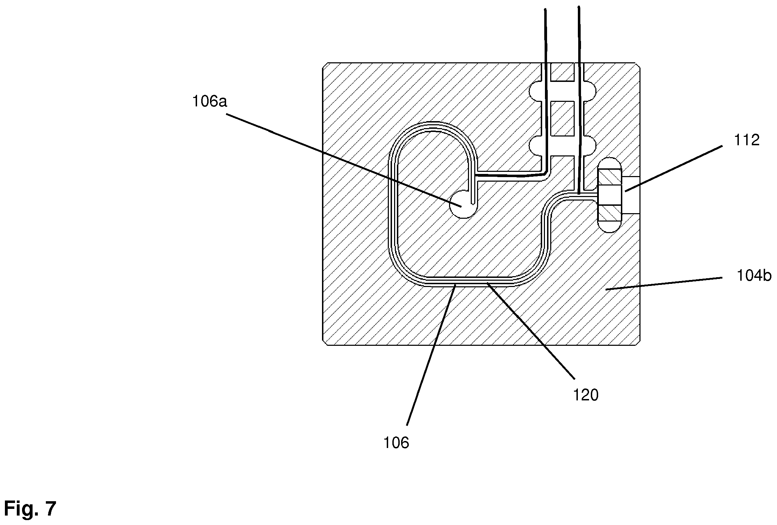

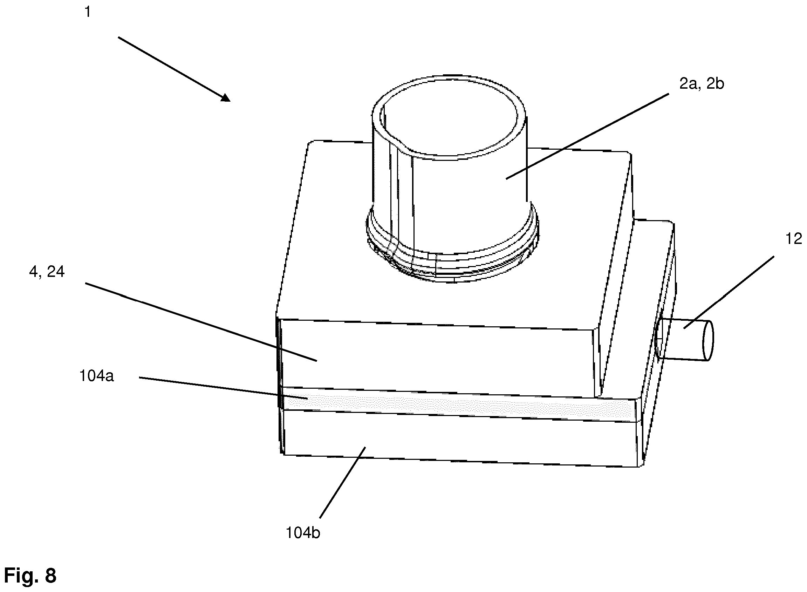

Gemäß einer weiteren, in den Figuren 6 bis 8 gezeigten Ausführungsform der erfindungsgemäßen Vorrichtung 1 sind auf der der Nut 6 gegenüberliegenden Seite der Heizplatte 4 eine Zwischenplatte 104a sowie eine an der Zwischenplatte 104a anliegende Grundplatte 104b angeordnet. Die Grundplatte 104b und die Zwischenplatte 104a sind quaderförmig ausgeführt und werden z.B. über nicht näher gezeigte Schrauben plan und gasdicht aneinander gedrängt, so dass sich der in Fig. 6 und 8 gezeigte Sandwich ergibt. In der Grundplatte 104b ist eine weitere Nut 106 geformt, in der ein weiteres Heizelement 120 zum Vorwärmen des Schutzgases aufgenommen ist. Die weitere Nut 106 wird durch die Zwischenplatte 104a unter Bildung eines weiteren Zufuhrkanals 112 abgedeckt, der stromaufwärts über die Zuleitung 12 mit Schutzgas aus der Schutzgasquelle 14 beaufschlagt wird, wie dies bereits zuvor im Zusammenhang mit der in Fig. 1 gezeigten Ausführungsform beschrieben wurde. Wie der Darstellung der Fig. 6 und 7 entnommen werden kann, ist in der Zwischenplatte 104a eine Zufuhrbohrung 110 geformt, über welche das stromabwärtige Ende des weiteren Zufuhrkanals 110 mit dem Zufuhrkanal 10 für das Schutzgas in der Heizplatte 4 kommuniziert.

Wie weiterhin in Fig. 6 und 7 angedeutet ist, weist die weitere Nut 106 an ihrem strömabwärtigen Ende einen sich erweiternden Abschnitt 106a auf, welcher mit der Zufuhrbohrung 110 in der Zwischenplatte 104a kommuniziert, um das durch das weitere Heizelement 120 vorerhitzte Schutzgas aus dem weiteren Zufuhrkanal 112 in den Zufuhrkanal 10 einzuleiten, über welchen es mittels der Durchgangskanäle 9 in die Nut 6 gelangt.

Diese Ausführungsform besitzt den Vorteil, dass die thermische Energie, welche dem Schutzgas über das weitere Heizelement 120 im weiteren Zufuhrkanal 112 zugeführt wird, in der Zwischenplatte, bzw. der Grundplatte 104b gespeichert wird, was besonders dadurch begünstigt wird, wenn diese aus Keramikwerkstoff gefertigt sind.

Das weitere Heizelement 120 ist bevorzugt ebenfalls ein elektrisch beheizbares Heizelement, das besonders bevorzugt in gleicher Weise wie das Heizelement 8 in der Nut der Heizplatte 4 eine mäanderförmige bandartige Metallfolie oder alternativ ein bekanntes Widerstandsheizelement ist, z.B. ein spiralförmig gewickelter Heizdraht. Wie in Fig. 7 angedeutet ist, können die Enden des weiteren Heizelements 120 über nicht näher bezeichnete elektrische Zuleitungen mit einer nicht gezeigten Stromquelle verbunden sein, welche in vorteilhafter Weise auch die Stromquelle sein kann, welche zum Beheizen des, bzw. der Heizelemente 8 in der Nut 6 der Heizplatte 4 verwendet wird.

Weiterhin kann bei einer besonders bevorzugten Ausführungsform der Erfindung der Zufuhrkanal 10 für das Schutzgas als eine zur Heizplatte 4 hin offene Aussparung in die an der Heizplatte 4 anliegende ebene Fläche der Zwischenplatte 104a eingebracht sein, wobei die Heizplatte 4 auf ihrer der Zwischenplatte 104a zugewandten Seite im Wesentlichen eben geformt ist und lediglich die mit der Nut 6 kommunizierenden Durchgangskanäle 9 aufweist. Hierdurch ergibt sich der Vorteil, dass die Heizplatte lediglich von einer Seite aus mit einem Werkzeug bearbeitet werden muss, um die Nut 6 und die Durchgangskanäle 9in diese einzubringen, was ein Umspannen der Heizplatte bei der Fertigung vermeidet. Zudem lässt sich der Zufuhrkanal 10 bei dieser Ausführungsform der Erfindung beispielsweise als eine einzige große Aussparung ausführen, die bei kleineren Heizplatten sämtliche Durchgangskanäle 9 versorgt, bzw. als beliebig gestaltbare mehrteilige Aussparung mit über radial verlaufende Nuten und Kanäle kommunizierende Kammer gestalten, welche bei großen Werkstücken ausschließlich unterhalb der zu verschmelzenden Bereiche eines Werkstücks angeordnet sind, um die Durchgangskanäle lokal zu versorgen. Es versteht sich, dass die zuletzt beschriebene Ausführungsform, d.h. der Sandwich aus Heizplatte 4, Zwischenplatte 104a und Grundplatte 104b bei der Anordnung 40 alternativ anstelle der in der in den Figuren 5a bis 5e dargestellten Heizplatte 4 eingesetzt werden kann, um die Vorteile einer kurzen Aufheizphase, präzisen Temperaturregelung sowie geringen Abwärmeverluste der in den Fig. 6 bis 8 beschriebenen Ausführungsform zu nutzen.

### Liste der Bezugszeichen

- 1: erfindungsgemäße Vorrichtung
- 2a: erstes Werkstück
- 2b: zweites Werkstück
- 3: Schweißfläche
- 4: Heizplatte
- 40: Oberseite der Heizplatte
- 4U: Unterseite der Heizplatte
- 6: Nut
- 6a: Grund der Nut
- 6b: Verteilkanal
- 7: elektrische Anschlusskontakte
- 8: Heizelement
- 8a: flächiger Außenabschnitt des Heizelements
- 9: Durchgangskanäle
- 10: Zufuhrkanal für Schutzgas
- 12: Zufuhrleitung
- 14: Schutzgasquelle
- 16: Ventil in Zufuhrleitung für das Schutzgas
- 18: Steuerungseinrichtung
- 20: Heizelement in Zufuhrleitung
- 22: Luftleitelement
- 24: Grundkörper der Heizplatte
- 40: Anordnung
- 42: erster Aktuator zum Bewegen der Vorrichtung
- 44: erste motorisch betätigbare Bewegungseinrichtung zum Bewegen des ersten Werkstücks
- 46: zweite motorisch betätigbare Bewegungseinrichtung zum Bewegen des zweiten Werkstücks

- 104a: Zwischenplatte
- 104b: Grundplatte
- 106: weitere Nut in Grundplatte
- 106a: erweiterter Abschnitt der Nut in Grundplatte
- 110: Zufuhrbohrung in Zwischenplatte
- 112: weiterer Zufuhrkanal
- 120: weiteres Heizelement in Nut in Zwischenplatte

- α: Winkel, unter welchem das Schutzgas auf den flächigen Außenabschnitt auftrifft

## Patentansprüche

1. Vorrichtung (1) zum thermischen Verschweißen von Werkstücken (2a, 2b), umfassend eine Heizplatte (4) aus einem thermisch isolierenden Werkstoff, in welchem eine Nut (6) geformt ist, in der sich ein elektrisch beheizbares Heizelement (8), insbesondere eine mäanderförmige bandartige Metallfolie oder ein Widerstandsheizelement, befindet, gegenüber welchem eine zu erwärmende Oberfläche eines zu verschweißenden Werkstücks (2a, 2b) aus thermoplastischem Kunststoffmaterial in dichtem Abstand zum Heizelement (8) positionierbar ist, wobei in der Heizplatte (4) ein Zufuhrkanal (10) für Schutzgas geformt ist, der mit der Nut (6) über wenigstens einen Durchgangskanal (9) kommuniziert und wobei der Zufuhrkanal (10) zur Zufuhr von Schutzgas über eine Zufuhrleitung (12) und ein Ventil (16) mit einer Schutzgasquelle (14) verbindbar ist.

2. Vorrichtung nach Anspruch 1,
**dadurch gekennzeichnet, dass**
in der Zufuhrleitung (12) von der Schutzgasquelle (14) zum Zufuhrkanal (10) ein Heizelement (20) angeordnet ist, mit welchem die Temperatur des in den Zufuhrkanal (10) zugeführten Schutzgases erhöhbar ist, insbesondere auf eine Temperatur, die unterhalb der Schmelztemperatur des eingesetzten thermoplastischen Kunststoffmaterials liegt.

3. Vorrichtung nach einem der vorhergehenden Ansprüche,
**dadurch gekennzeichnet, dass**
auf der Oberseite (40) und/oder Unterseite (4U) der Heizplatte (4) ein spoilerartiges Luftleitelement (22) angeordnet ist, welches bei der Bewegung der Heizplatte (4) Umgebungsluft über das Heizelement (8) hinweg leitet.

4. Vorrichtung nach einem der vorhergehenden Ansprüche,
**dadurch gekennzeichnet, dass**
das elektrische Heizelement (8) wenigstens einen ebenen flächigen Außenabschnitt (8a) aufweist, und dass der Durchgangskanal (9) relativ zu dem ebenen flächigen Außenabschnitt (8a) in der Weise angeordnet ist, dass das Schutzgas in einem Winkel α von weniger als 45°, bevorzugt weniger als 20°, und besonders bevorzugt weniger als 15°, auf den ebenen flächigen Außenabschnitt (8a) des Heizelements (8) auftrifft.

5. Vorrichtung nach Anspruch 4,
**dadurch gekennzeichnet, dass**
das Heizelement (8) ein mäanderförmiges oder zickzack-förmiges Metallband umfasst, welches eine Vielzahl von stehend in der Nut (6) aufgenommenen, aneinander hängenden flächigen Außenabschnitten (8a) besitzt, und dass sich der Zufuhrkanal (10) für das Schutzgas unterhalb der stehenden flächigen Außenabschnitte (8a) erstreckt, derart, dass sich die ebenen flächigen Außenabschnitte (8a) auf dem Grund (6a) der Nut (6) abstützen und zumindest teilweise oberhalb des Durchgangskanals (9) über diese hinweg erstrecken und.

6. Vorrichtung nach einem der vorhergehenden Ansprüche,
**dadurch gekennzeichnet, dass**
die Nut (6) zur Vermeidung eines Austretens von Schutzgas beim Verfahren der Heizplatte (4) temporär durch ein Abdeckelement verschließbar ist.

7. Vorrichtung nach einem der vorhergehenden Ansprüche,
**dadurch gekennzeichnet, dass**
in der Zufuhrleitung (12) ein Ventil (16) angeordnet ist, welches zur Veränderung der von der Schutzgasquelle (14) in die Zufuhrleitung (12) zugeführten Menge an Schutzgas durch eine Steuerungseinrichtung (18) betätigbar ist.

8. Vorrichtung nach einem der vorhergehenden Ansprüche,
**dadurch gekennzeichnet, dass**
der Zufuhrkanal (10) für das Schutzgas ein geschlossener umlaufender Kanal ist, und dass entlang des Zufuhrkanals (10) eine Vielzahl von Durchgangskanälen (9) angeordnet ist, über welche der Zufuhrkanal (10) mit der Nut (6) kommuniziert.

9. Vorrichtung nach einem der Ansprüche 2 bis 8,
**dadurch gekennzeichnet, dass**
auf der der Nut (6) gegenüberliegenden Seite der Heizplatte (4) eine Zwischenplatte (104a) sowie eine an der Zwischenplatte anliegende Grundplatte (104b) angeordnet sind, wobei in der Grundplatte (104b) eine weitere Nut (106) mit einem in dieser aufgenommenen weiteren Heizelement (120) zum Vorwärmen des Schutzgases geformt ist, welche durch die Zwischenplatte (104a) unter Bildung eines weiteren Zufuhrkanals (112) abgedeckt wird, und dass in der Zwischenplatte (104a) eine Zufuhrbohrung (110) geformt ist, über welche das stromabwärtige Ende des weiteren Zufuhrkanals (112) mit dem Zufuhrkanal (10) für das Schutzgas kommuniziert.

10. Vorrichtung nach Anspruch 9,
**dadurch gekennzeichnet, dass**
das weitere Heizelement (120) ein elektrisch beheizbares Heizelement, insbesondere eine mäanderformige bandartige Metallfolie oder ein Widerstandsheizelement ist.

11. Vorrichtung nach Anspruch 9 oder 10,
**dadurch gekennzeichnet, dass**
die Zwischenplatte (104a) und/oder die Grundplatte (104b) aus Keramikwerkstoff gefertigt sind.

12. Vorrichtung nach einem der Ansprüche 9 bis 11,
**dadurch gekennzeichnet, dass**
der Zufuhrkanal (10) für das Schutzgas als eine zur Heizplatte (4) hin offene Aussparung in die an der Heizplatte (4) anliegende ebene Fläche der Zwischenplatte (104a) eingebracht ist, und dass die Heizplatte (4) auf ihrer der Zwischenplatte (104a) zugewandten Seite im Wesentlichen eben ausgestaltet ist und die mit der Nut (6) kommunizierenden Durchgangskanäle (9) aufweist.

13. Vorrichtung nach einem der Ansprüche 9 bis 12,
**dadurch gekennzeichnet, dass**
die weitere Nut (106) an ihrem strömabwärtigen Ende einen sich erweiternden Abschnitt (106a) aufweist, welcher mit der Zufuhrbohrung (110) in der Zwischenplatte (104a) kommuniziert.

14. Vorrichtung nach einem der vorhergehenden Ansprüche,
**dadurch gekennzeichnet, dass**
die Heizplatte (4) aus Keramikwerkstoff besteht und einen abgeflachten, quaderförmigen Grundkörper (24) besitzt, auf dessen einander gegenüberliegenden Seiten (40, 4U) jeweils wenigstens ein Heizelement (8) in einer zugehörigen Nut (6) aufgenommen ist, welches über einen zugeordneten Zufuhrkanal (10) mit Schutzgas beaufschlagbar ist.

15. Anordnung (40) zum Verschweißen eines ersten und eines zweiten Werkstücks (2a, 2b) aus thermoplastischem Kunststoffmaterial umfassend eine durch einen ersten Aktuator (42) bewegbare Vorrichtung (1) nach einem der vorhergehenden Ansprüche, sowie eine erste motorisch betätigbare Bewegungseinrichtung (44) zum Halten und Bewegen des ersten Werkstücks (2a) in einer Richtung orthogonal zur Bewegungsrichtung der Vorrichtung (1) und eine zweite motorisch betätigbare Bewegungseinrichtung (46), mittels welcher das zweite Werkstück (2b) in einer orthogonal zur Bewegungsrichtung der Heizplatte (4) verlaufenden Richtung auf das erste Werkstück (2a) zu und von diesem weg bewegbar ist.

## Claims

1. Apparatus (1) for thermally welding workpieces (2a, 2b), comprising a heating plate (4) of a thermally insulating material, in which a groove (6) is formed in which an electrically heatable heating element (8), in particular a meandering strip-like metal foil or a resistance heating element is arranged, opposite of which a surface to be heated of a workpiece (2a, 2b) that is to be welded and that is made of thermoplastic material can be positioned with a close spacing in relation to the heating element (8),
wherein
a feed channel (10) for shielding gas is formed in the heating plate (4), which feed channel communicates with the groove (6) via at least one through-channel (9), and wherein for feeding shielding gas the feed channel (10) can be connected to a shielding gas source (14) via a feed line (12) and a valve (16).

2. Apparatus according to Claim 1,
**characterized in that**
a heating element (20), by means of which the temperature of the shielding gas fed in the feed channel (10) can be increased, in particular to a temperature below the melting temperature of the thermoplastic material used, is disposed in the feed line (12) from the shielding gas source (14) to the feed channel (10).

3. Apparatus according to either of the preceding claims,
**characterized in that**
a spoiler-like air-guiding element (22), which guides ambient air over the heating element (8) when the heating plate (4) is moving, is disposed on the top side (40) and/or bottom side (4U) of the heating plate (4).

4. Apparatus according to one of the preceding claims,
**characterized in that**
the electrical heating element (8) has at least one flat extensive outer portion (8a), and **in that** the through-channel (9) is disposed relative to the flat extensive outer portion (8a) in such a way that the shielding gas impinges on the flat extensive outer portion (8a) of the heating element (8) at an angle α of less than 45°, preferably less than 20°, and particularly preferably less than 15°.

5. Apparatus according to Claim 4,
**characterized in that**
the heating element (8) comprises a meandering or zigzag-shaped metal strip, which has a multiplicity of extensive outer portions (8a) linked together and received upright in the groove (6), and **in that** the feed channel (10) for the shielding gas extends underneath the upright extensive outer portions (8a), in such a way that the flat extensive outer portions (8a) are supported on the bottom (6a) of the groove (6) and extend at least partially above the through-channel (9) and beyond it and.

6. Apparatus according to one of the preceding claims,
**characterized in that**
the groove (6) is temporarily closable by a covering element to avoid the egress of shielding gas when the heating plate (4) is moving.

7. Apparatus according to one of the preceding claims,
**characterized in that**
a valve (16), which can be actuated by a control device (18) to modify the amount of shielding gas fed to the feed line (12) from the shielding gas source (14), is disposed in the feed line (12).

8. Apparatus according to one of the preceding claims,
**characterized in that**
the feed channel (10) for the shielding gas is a closed channel running around the periphery, and **in that** a multiplicity of through-channels (9) via which the feed channel (10) communicates with the groove (6) is disposed along the feed channel (10).

9. Apparatus according to one of Claims 2 to 8,
**characterized in that**
an intermediate plate (1 04a) and a baseplate (104b) that rests against the intermediate plate are disposed on the opposite side of the heating plate (4) to the groove (6), wherein a further groove (106), which has a further heating element (120) received therein for preheating the shielding gas and which is covered by the intermediate plate (104a) with formation of a further feed channel (112), is made in the baseplate (104b), and **in that** a feed bore (110), via which the downstream end of the further feed channel (112) communicates with the feed channel (10) for the shielding gas, is made in the intermediate plate (104a).

10. Apparatus according to Claim 9,
**characterized in that**
the further heating element (120) is an electrically heatable heating element, in particular a meandering strip-like metal foil or a resistance heating element.

11. Apparatus according to Claim 9 or 10,
**characterized in that**
the intermediate plate (104a) and/or the baseplate (104b) are manufactured from ceramic material.

12. Apparatus according to one of Claims 9 to 11,
**characterized in that**
the feed channel (10) for the shielding gas is introduced into that flat surface of the intermediate plate (104a) that rests against the heating plate (4) as a cutout open towards the heating plate (4), and **in that** the heating plate (4) has a substantially flat design on its side facing towards the intermediate plate (104a) and comprises the through-channels (9) communicating with the groove (6).

13. Apparatus according to one of Claims 9 to 12,
**characterized in that**
the further groove (106) at its downstream end has a widening portion (106a), which communicates with the feed bore (110) in the intermediate plate (104a).

14. Apparatus according to one of the preceding claims,
**characterized in that**
the heating plate (4) consists of ceramic material and has a flattened, cuboidal main body (24), on each opposite side (40, 4U) of which at least one heating element (8) is received in an associated groove (6) and can have shielding gas applied to it through an associated feed channel (10).

15. Arrangement (40) for welding a first and a second workpiece (2a, 2b) of thermoplastic material, the arrangement comprising an apparatus (1) according to one of the preceding claims that can be moved by a first actuator (42), and a first movement device (44), which can be actuated by a motor and is intended for stopping and moving the first workpiece (2a) in a direction orthogonal to the movement direction of the apparatus (1), and a second movement device (46), which can be actuated by a motor and by means of which the second workpiece (2b) can be moved up to and away from the first workpiece (2a) in a direction running orthogonally in relation to the movement direction of the heating plate (4).

## Revendications

1. Dispositif (1) pour le soudage thermique de pièces (2a, 2b), comprenant une plaque chauffante (4) en un matériau thermiquement isolant, dans laquelle est formée une rainure (6) dans laquelle se trouve un élément chauffant (8) pouvant être chauffé électriquement, notamment une feuille métallique de type bande de forme sinueuse ou un élément chauffant résistif, par rapport auquel une surface à chauffer d'une pièce à souder (2a, 2b) en matière thermoplastique peut être positionnée à une distance rapprochée de l'élément chauffant (8),
un canal d'amenée (10) pour du gaz protecteur étant formé dans la plaque chauffante (4), qui communique avec la rainure (6) par l'intermédiaire d'au moins un canal de passage (9), et le canal d'amenée (10) pour l'amenée de gaz protecteur pouvant être relié à une source de gaz protecteur (14) par l'intermédiaire d'une conduite d'amenée (12) et d'une soupape (16).

2. Dispositif selon la revendication 1, **caractérisé en ce que** dans la conduite d'amenée (12) de la source de gaz protecteur (14) au canal d'amenée (10) est agencé un élément chauffant (20) avec lequel la température du gaz protecteur amené dans le canal d'amenée (10) peut être augmentée, notamment à une température qui se situe en dessous de la température de fusion de la matière thermoplastique utilisée.

3. Dispositif selon l'une quelconque des revendications précédentes, **caractérisé en ce qu'**un élément de guidage d'air (22) de type déflecteur est agencé sur le côté supérieur (40) et/ou le côté inférieur (4U) de la plaque chauffante (4), lequel guide l'air ambiant au-dessus de l'élément chauffant (8) lors du déplacement de la plaque chauffante (4).

4. Dispositif selon l'une quelconque des revendications précédentes, **caractérisé en ce que** l'élément chauffant électrique (8) présente au moins une section extérieure de surface plane (8a), et **en ce que** le canal de passage (9) est agencé par rapport à la section extérieure de surface plane (8a) de telle manière que le gaz protecteur rencontre la section extérieure de surface plane (8a) de l'élément chauffant (8) selon un angle α inférieur à 45°, de préférence inférieur à 20°, et de manière particulièrement préférée inférieur à 15°.

5. Dispositif selon la revendication 4, **caractérisé en ce que** l'élément chauffant (8) comprend une bande métallique de forme sinueuse ou en forme de zigzag, qui possède une pluralité de sections extérieures de surface (8a) accrochées les unes aux autres, reçues verticalement dans la rainure (6), et **en ce que** le canal d'amenée (10) pour le gaz protecteur s'étend en dessous des sections extérieures de surface verticales (8a) de telle sorte que les sections extérieures de surface planes (8a) reposent sur le fond (6a) de la rainure (6) et s'étendent au moins partiellement au-dessus du canal de passage (9) et.

6. Dispositif selon l'une quelconque des revendications précédentes, **caractérisé en ce que** la rainure (6) peut être fermée temporairement par un élément de couverture pour éviter une sortie de gaz protecteur lors du déplacement de la plaque chauffante (4).

7. Dispositif selon l'une quelconque des revendications précédentes, **caractérisé en ce qu'**une soupape (16) est agencée dans la conduite d'amenée (12), laquelle peut être actionnée par un appareil de commande (18) pour modifier la quantité de gaz protecteur amenée depuis la source de gaz protecteur (14) dans la conduite d'amenée (12).

8. Dispositif selon l'une quelconque des revendications précédentes, **caractérisé en ce que** le canal d'amenée (10) pour le gaz protecteur est un canal périphérique fermé, et **en ce que** le long du canal d'amenée (10) est agencée une pluralité de canaux de passage (9) par l'intermédiaire desquels le canal d'amenée (10) communique avec la rainure (6).

9. Dispositif selon l'une quelconque des revendications 2 à 8, **caractérisé en ce que**, sur le côté de la plaque chauffante (4) opposé à la rainure (6), sont agencées une plaque intermédiaire (104a) ainsi qu'une plaque de base (104b) s'appliquant contre la plaque intermédiaire, une autre rainure (106) étant formée dans la plaque de base (104b) avec un autre élément chauffant (120) reçu dans celle-ci pour le préchauffage du gaz protecteur, qui est recouverte par la plaque intermédiaire (104a) pour former un autre canal d'amenée (112), et **en ce qu'**un alésage d'amenée (110) est formé dans la plaque intermédiaire (104a), par l'intermédiaire duquel l'extrémité aval de l'autre canal d'amenée (112) communique avec le canal d'amenée (10) pour le gaz protecteur.

10. Dispositif selon la revendication 9, **caractérisé en ce que** l'autre élément chauffant (120) est un élément chauffant pouvant être chauffé électriquement, notamment une feuille métallique de type bande de forme sinueuse ou un élément chauffant résistif.

11. Dispositif selon la revendication 9 ou 10, **caractérisé en ce que** la plaque intermédiaire (104a) et/ou la plaque de base (104b) sont fabriquées en matériau céramique.

12. Dispositif selon l'une quelconque des revendications 9 à 11, **caractérisé en ce que** le canal d'amenée (10) pour le gaz protecteur est pratiqué sous la forme d'un évidement ouvert vers la plaque chauffante (4) dans la surface plane de la plaque intermédiaire (104a) adjacente à la plaque chauffante (4), et **en ce que** la plaque chauffante (4) est conçue sous forme essentiellement plane sur son côté tourné vers la plaque intermédiaire (104a) et présente les canaux de passage (9) communiquant avec la rainure (6).

13. Dispositif selon l'une quelconque des revendications 9 à 12, **caractérisé en ce que** l'autre rainure (106) présente, à son extrémité aval, une section s'élargissant (106a) qui communique avec l'alésage d'amenée (110) dans la plaque intermédiaire (104a).

14. Dispositif selon l'une quelconque des revendications précédentes, **caractérisé en ce que** la plaque chauffante (4) est constituée de matériau céramique et possède un corps de base (24) aplati, de forme parallélépipédique, sur les côtés (40, 4U) opposés duquel est reçu au moins un élément chauffant (8) dans une rainure (6) correspondante, lequel peut être alimenté en gaz protecteur par l'intermédiaire d'un canal d'amenée (10) associé.

15. Agencement (40) pour le soudage d'une première et d'une deuxième pièce (2a, 2b) en matière thermoplastique, comprenant un dispositif (1) selon l'une quelconque des revendications précédentes déplaçable par un premier actionneur (42), ainsi qu'un premier appareil de déplacement (44) actionnable par un moteur pour maintenir et déplacer la première pièce (2a) dans une direction orthogonale à la direction de déplacement du dispositif (1) et un deuxième appareil de déplacement (46) actionnable par un moteur au moyen duquel la deuxième pièce (2b) peut être déplacée vers et à distance de la première pièce (2a) dans une direction orthogonale à la direction de déplacement de la plaque chauffante (4).
